# EUROPEAN PATENT APPLICATION

(11) **EP 3 446 870 A1**
(43) Date of publication of application: **27.02.2019**
(21) Application number: 17187886.1
(22) Date of filing: 25.08.2017
(51) Int. Cl.: B32B 7/12, B32B 27/08, B32B 27/34, B32B 27/32

(54) **STEAM-STABLE SEMI-RIGID MULTILAYER STRUCTURES**

(71) Applicant: Amcor Flexibles Winterbourne Limited, Bristol BS34 6PT (GB)
(72) Inventor: MASSEY, Robert James, BRISTOL, BS36 2LJ (GB)
(74) Representative: Pronovem

(57) **Abstract**

The present invention is related to a multilayer film structure comprising two polyamide layers and a polyolefin-based core layer sandwiched between the polyamide layers.

## Description

### Field of the Invention

The present invention relates to a multilayer film structure and more particularly, to a packaging formed by said multilayer film structures, in particular a sterilizable blister packaging.

Multilayer film packaging is widely used for the commercial packaging of food products, personal care products and human health products such as pharmaceutical and medical devices or precision instruments. The use of this type of packaging has become widespread, mainly due to the possibility to incorporate suitable moisture, dust, UV and/or gas barriers into the packages when such properties are desired for maintaining the product contained therein. For example, blister packaging is extensively used in the pharmaceutical industry for packaging medication or the like in capsule, lozenge, or pill form because the integrity of the drug can be maintained through the proper selection of materials used to form the packaging.

In particular for blister packaging of medical devices, said multilayer film structures need to be thermoformable and sterilizable. The pack needs to retain its formed shape and integrity during and after the sterilization procedure.

Where a steam sterilization procedure is used (also known as a retort sterilization procedure), the blister packaging needs to be resistant to the temperatures and humidity present.

Conventional materials used for forming the blistered films include plastics such as polyvinylchloride, polyvinylidene chloride, polychlorotrifluoroethylene, polyamides, polyolefins, polyesters, polycarbonates.

Multilayer films for blister packaging are for example disclosed in WO 2012037180; US 2005/0186379; US 9,511,914; US 2010/0189942; WO 2015/199637; US 2016/0368682; US 2017/081099 and US 2017/0081100.

CN 102225646 discloses a multilayer coextrusion medical blister composite packaging film suitable for steam sterilization that can be a five layer film, the five layers from top to bottom being:
- 10 to 25 parts by mass of a polyamide resin layer;
- 5 to 15 parts by mass of the pressure-sensitive adhesive layer;
- 10 to 25 parts by mass of a polyamide resin layer;
- 5 to 15 parts by mass of the pressure-sensitive adhesive layer; and
- 30 to 60 parts by mass of a low-density polyethylene resin or polypropylene layer.

As mentioned, the polyamides are aliphatic polyamides, such as Nylon 6 and aliphatic copolyamide PA6/66.

For retort sterilization at 114°C or above, the bottom layer would be a polypropylene layer for temperature resistance. Both the aliphatic polyamides and polypropylene are semi-crystalline polymers which are usually thermoformed above their glass-transition temperature s but below their crystalline melting points.

The glass-transition temperature of polypropylene and the aliphatic polyamides, as disclosed in CN 102225646, is lower than the temperature used for retort sterilization, which results in shrinkage or distortion of the formed pack in the sterilization cycle as the stress imparted to the polymer chains during the thermoforming operation is relaxed by the increased molecular motion at elevated temperature. This is a problem with this type of pack. Thermoforming at higher temperatures can reduce the stress frozen into packs before retorting and so reduce shrinkage, but this approach is limited in its applicability for these film types as the forming performance of the films (as assessed by corner thickness and appearance) decreases when the forming temperature used is significantly above the glass-transition temperature of the aliphatic nylon.

The use of polycarbonates as blistered films for sterilisable packaging is disclosed in for example US 4,805,377 and US 4,947,620 and has advantages because the glass-transition temperature of polycarbonate is above the temperatures commonly used for retort sterilization and so shrink back and distortion is greatly reduced. Yet, steam-sterilization conditions may break down the polycarbonate causing the leak of free Bisphenol A, a chemical that is believed to be harmful to health.

### Aim of the Invention

The present invention aims to provide a multilayer film that does not present the drawbacks of the prior art.

It is another aim of the present invention to provide a multilayer film for sterilizable blister packaging, in particular steam-sterilizable blister packaging, preserving the overall properties of prior-art blister packagings.

### Summary of the invention

The present invention discloses a multilayer film structure comprising at least two layers of polyamide and a polyolefin-based core layer sandwiched between the polyamide layers, wherein:
- the glass-transition temperature of the polyamide is at least 135°C;
- the melting-peak temperature of the polyolefin-based core layer, is lower than the glass-transition temperature of the polyamide plus 35°C;
   wherein the glass-transition temperature and the melting-peak temperature are measured by differential scanning calorimetry, according to ISO 11357, with a heating gradient of 10°C/min.;
- the thickness of the multilayer film structure is more than 100 µm and the combined layer thickness of the polyamide layers represents less than 40%, preferably less than 30 % of the multilayer film structure.

Preferred embodiments of the present invention disclose one or more of the following features:
- the glass-transition temperature of the polyamide is at least 5°C higher than the melting-peak temperature of the polyolefin-based core layer;
- the overall layer thickness is more than 120 µm, preferably more than 140 µm, more preferably more than 160 µm, most preferably more than 180 µm;
- the overall layer thickness is at least 200 µm, preferably at least 220 µm, more preferably at least 250 µm, most preferably at least 300 µm;
- the polyamide comprises alkylene and cyclohexylene moieties, or alkylene, cyclohexylene and phenylene moieties;
- the polyolefin-based core layer comprises one or more layers selected from the group consisting of high-density polyethylene, polypropylene and polyolefin copolymer;
- the polyolefin-based core layer comprises one or more layers selected from the group consisting of modified polyethylene, modified polypropylene and modified polyolefin copolymer, in contact with the polyamide layer, said modified polyethylene, polypropylene and polyolefin copolymer comprising one or more copolymerized or grafted components selected from the group consisting of maleic anhydride, vinylacetate, vinylalcohol, acrylic acid, methacrylic acid, alkyl acrylate, alkyl methacrylate;
- the core layer additionally comprises a tie layer facing the polyamide layer, said tie layer comprising modified polyethylene layer, modified polypropylene or modified polyolefin copolymer;
- the melting-peak temperature of the polyolefin-based core layer is 125°C or more, preferably 130°C or more, as measured by differential scanning calorimetry, according to ISO 11357, with a heating gradient of 10°C/min;
- the thickness of the polyolefin-based core layer is at least 60 µm, preferably at least 80 µm, more preferably at least 100 µm, most preferably at least 120 µm;
- the multilayer film structure comprises an additional seal layer in contact with said multilayer film structure, said seal layer comprising a polyolefin selected from the group consisting of propylene homopolymer or propylene copolymer or terpolymer, the comonomers being ethylene, C4 - C8 alpha olefins or mixtures thereof;
- the seal layer is characterized by a melting-peak temperature of at least 5°C higher than the glass-transition temperature of the polyamide, as measured by differential scanning calorimetry, according to ISO 11357, with a heating gradient of 10°C/min.;
- the additional seal layer has a thickness comprised between 2 and 30 µm, preferably between 4 and 25 µm;
- the multilayer film structure is obtained by a process selected from the group consisting of lamination, co-extrusion, extrusion coating lamination and a combination thereof.

The present invention further discloses a sterilizable packaging comprising said multilayer film structure, wherein said packaging preferably is a blister packaging.

### Brief Description of the Drawings

Figures 1 to 3 show a section through the multilayer film structure in accordance with the invention.
Figures 4 to 5 show a section through the multilayer film structure comprising a seal layer.

### Key

### A. core layer

1. polyamide layer
2. high-density polyethylene / polypropylene / polyolefin copolymer layer
3. modified polyethylene / modified polypropylene / modified polyolefin copolymer layer
4. tie layer / adhesive layer
5. seal layer

### Detailed Description of the Invention

The present invention provides a multilayer film structure, in particular a multilayer film structure for blister packages, said packages being sterilizable at 114°C for at least 30 minutes, or at 121 °C for at least 15 minutes, or at 134°C for at least 10 minutes, further substantially maintaining the characteristics of prior-art blisters.

The multilayer film structure of the present invention has a sandwich-like structure comprising a core layer, said core layer comprising one or more polyolefin(s) and/or modified polyolefin(s) and polyamide-based outer layers enclosing the core layer.

The polyamide of the outer layers is essentially amorphous and is characterized by a glass-transition temperature of at least 135°C, preferably of at least 140°C, as measured on a dry sample by differential scanning calorimetry, according to ISO 11357, with a heating gradient of 10°C/min.

The expression "essentially amorphous" has to be understood as that the weight percentage of non-amorphous polyamide is less than 8, preferably less than 5, as determined by differential scanning calorimetry.

To reach the above-mentioned glass-transition temperature, the polyamide comprises either
- aliphatic and cycloaliphatic blocks as a result of a stoichiometric reaction between a diamine preferably selected from the group consisting of ethylene diamine; tetramethylenediamine; pentamethylenediamine; hexamethylenediamine; octamethylenediamine; 1,4-diaminocyclohexane; 1,3-diaminocyclohexane; 5-amino-1,3,3-trimethylcyclohexanemethylamine, 4,4'-methylenebis(cyclohexylamine); 3,3-dimethyl-4,4-diaminodicyclohexylmethane; 2,2,4-trimethyl hexamethylene diamine; 2,4,4-trimethyl hexamethylene diamine and mixtures thereof and a diacid preferably selected from the group consisting of succinic acid; glutaric acid; adipic acid; sebacic acid; dodecanedioic acid; azelaic acid; trimethyl adipic acid; 1,4-cyclohexanedicarboxylic acid; 1,3-cyclohexanedicarboxylic acid and mixtures thereof; or
- aliphatic, cycloaliphatic and aromatic blocks as a result of a stoichiometric reaction between a diamine preferably selected from the group consisting of ethylenediamine tetramethylenediamine; pentamethylenediamine; hexamethylenediamine; octamethylenediamine; 1,4-phenyl-diamine (para-phenylenediamine); 1,3-phenyl-diamine (m-phenylenediamine); 1,4-diaminocyclohexane; 1,3-diaminocyclohexane; 5-amino-1,3,3-trimethylcyclohexanemethylamine, m-xylylenediamine; 4,4'-methylenebis(cyclohexylamine); 3,3-dimethyl-4,4-diaminodicyclohexylmethane; 2,2,4-trimethyl hexamethylene diamine; 2,4,4-trimethyl hexamethylene diamine and mixtures thereof and a diacid preferably selected from the group consisting of terephthalic acid; isophthalic acid; succinic acid; glutaric acid; adipic acid; sebacic acid; dodecanedioic acid; azelaic acid; trimethyl adipic acid; 1,4-cyclohexanedicarboxylic acid; 1,3-cyclohexanedicarboxylic acid and mixtures thereof.

The aliphatic blocks can be obtained from omega-amino carboxylic acids or their lactams comprising 6 to 12 carbon atoms such as for example epsilon-caprolactam or omega-laurolactam.

The polyamide preferably includes one or more cyclohexylene moieties.

Preferably, the polyamide is a result of a stoichiometric reaction between either
- 4,4'-methylenebis(cyclohexylamine) or 3,3-dimethyl-4,4-diaminodicyclohexylmethane or mixtures thereof, and dodecanedioic acid; or
- 4,4'-methylenebis(cyclohexylamine) or 3,3-dimethyl-4,4-diaminodicyclohexylmethane or mixtures thereof, and a diacid, preferably dodecanedioic acid, isophthalic acid and mixtures thereof.

The core layer of the blister component of the present invention comprises one or more layers comprising a polyolefin such as high-density polyethylene, polypropylene, polyolefin copolymers, modified polyethylene, modified polypropylene, modified polyolefin copolymers and mixtures thereof.

The expressions "modified polyethylene", "modified polypropylene" and "modified polyolefin copolymer" have to be understood as polyethylene, polypropylene or polyolefin copolymer modified with functional groups preferably obtained from the incorporation of one or more components selected from the group consisting of maleic anhydride, vinylacetate, vinylalcohol, acrylic acid, methacrylic acid, alkyl acrylate, alkyl methacrylate and mixtures thereof.

The modified polyethylene, polypropylene and polyolefin copolymer are preferably maleic anhydride modified polyethylene, maleic anhydride modified polypropylene and maleic anhydride modified polyolefin.

The core layer preferably comprises a high-density polyethylene or a polypropylene layer.

To improve the compatibility between the outer polyamide layers and the polyolefin of the core layer, a tie layer may be introduced as interface, said tie layer preferably comprising modified polyethylene, modified polypropylene or modified polyolefin copolymer, optionally in a blend with high-density polyethylene, polypropylene or polyolefin copolymer, said tie layer being part of the core layer and improving the adhesion between the core layer and the polyamide outer layers.

The polyolefin and the modified polyolefin are characterized by a melting-peak temperature of 125°C or more, preferably of 130°C or more, as measured by differential scanning calorimetry, according to ISO 11357, with a heating gradient of 10°C/min.

Within the context of the present invention it is important that the glass-transition temperature of the dry polyamide outer layers is higher than the sterilization temperature that will be used in subsequent processing. The high thermoforming temperatures facilitated by this property ensure that a minimum of stress is stored in the polyolefin layers after forming. This is particularly true if the melting point of the polyolefin layer is below the thermoforming temperature.

The sandwich structure comprising a core layer with predominant layer thickness, enclosed by two polyamide layers, wherein the criteria for both, the melting-peak temperature of the core layer and the glass-transition temperature of the polyamide layers are fulfilled, is key for the blister-forming process: at the temperature of the thermoforming process, the core layer melts, at least partially, while the outer polyamide layers only soften, thus allowing thermoforming while avoiding sticking to the mold and ensuring a minimum of stress stored in the polyolefin layer.

At sterilization temperature and humidity, the glass-transition temperature of the polyamide outer layers will be reduced by moisture absorption, potentially to below the sterilization temperature, risking a tendency to pack shrinkage and distortion. However, the polyolefin core layer is chosen such that it is below its crystalline melting point under these conditions. As the polyolefin layer is largely unaffected by moisture and contains a low level of stress, it is resistant to shrinkage or distortion. It has been found that the overall distortion resistance of packs made in this way is adequate for medical packaging applications.

Preferably, the melting-peak temperature of the polyolefin-based core layer is lower than the glass-transition temperature of the polyamide plus 35°C, preferably 30°C, (Tₘ^{polyolefin} < T_{g}^{polyamide} + 35°C, preferably 30°C), both the melting-peak temperature and the glass-transition temperature being measured by differential scanning calorimetry, according to ISO 11357, with a heating gradient of 10°C/min.

More preferably, the glass-transition temperature of the polyamide outer layers is at least 5°C higher than the melting-peak temperature of the polyolefin-based core layer.

The multilayer film structure of the present invention is characterized by an overall thickness of more than 100 µm, preferably of more than 120 µm, more preferably of more than 140 µm, most preferably of more than 160 µm, or even more than 180 µm.

Preferably, the multilayer film structure has an overall thickness of at least 200 µm, preferably of at least 220 µm, more preferably of at least 250 µm, most preferably of at least 300 µm.

The thickness of the combined polyamide outer layers represents 40% or less, preferably 30% or less, more preferably 20% or less, of the thickness of the global multilayer film structure.

The thickness of the polyolefin-based core layer is more than 60 µm, preferably more than 80 µm, more preferably more than 100 µm, most preferably more than 120 µm.

Preferably, the thickness of the polyolefin core layer is at least 140 µm, more preferably at least 160 µm, most preferably at least 180 µm, or even at least 200 µm.

Preferably, the multilayer film structure additionally comprises a seal layer at the outer side of one of the polyamide layers, for heat-sealing to a lidding component.

The multilayer film structure of the present invention may comprise a seal layer adhered to one of the outer polyamide layers via a tie layer or an adhesive layer, said tie layer comprising a modified polyethylene or preferably a modified polypropylene, with a composition as disclosed in paragraphs [0027] and [0028], said adhesive layer being obtained from an adhesive selected from the group consisting of polyurethane dispersions, acrylic emulsions, water-based polyvinyl alcohol, vinyl acetate copolymers, modified polyolefins, polyesters, synthetic or natural rubber, solvent-based acrylics, one or two component solvent-based polyurethanes and radiation-curable adhesives.

Preferably, the tie layer is an anhydride modified polypropylene.

Preferably, the adhesive layer to bond the seal layer to the multilayer film structure is obtained from a two-component solvent-based polyurethane adhesive.

The seal layer preferably comprises a polypropylene homopolymer or an ethylene-propylene heterophasic copolymer or a random ethylene-propylene copolymer characterized by a melting-peak temperature that is higher than the glass-transition temperature of the polyamide outer layer.

The seal layer is generally characterized by a thickness comprised between 2 and 30 µm, preferably between 4 and 25 µm.

The multilayer film structure of the present invention, which may optionally comprise a seal layer, is obtained from a lamination process, a co-extrusion process, an extrusion-coating process and a combination thereof.

The thermoformed multilayer film, which may optionally comprise a seal layer, form the blister package together with a lidding component.

Preferably, the lidding component is a multilayer film, optionally comprising a metallic film.

The lidding component is generally obtained by a lamination, a co-extrusion, an extrusion-coating process or a combination thereof.

The blister package can be manufactured using methods known in the art.

Generally, the blister cavities are thermoformed from the multilayer structure of the present invention, in-line prior to filling the cavities with a product to be packed.

The multilayer film structure is fed into a preheated oven and is then pressed into a mold at a forming station using pressure, plugs and vacuum. It is then cooled so that its new shape is maintained while it hardens. The thus-formed cavities are then filled with a product.

### Examples

The following illustrative examples are merely meant to exemplify the present invention but they are not intended to limit or otherwise define the scope of the present invention.

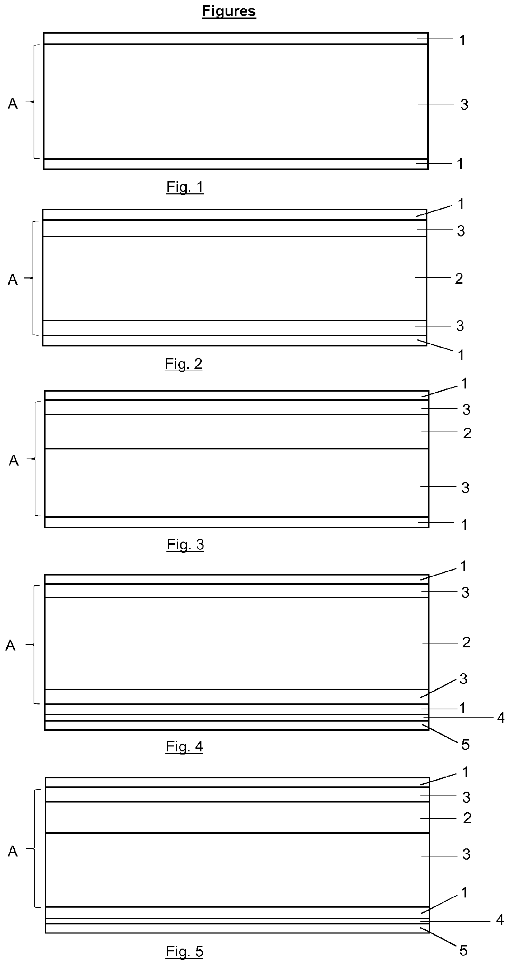

In Table 1 (Examples 1 to 10), the layer compositions are reproduced along with the respective layer thickness of their multilayer blister component, wherein:
- Example 1 is represented in Fig. 1;
- Examples 5, 7 and 8 are represented in Fig. 2;
- Examples 2, 3, 4 and 6 are represented in Fig. 3.
- Example 9 is represented in Fig. 4.
- Example 10 is represented in Fig. 5.

In Table 1:
- Evonik Trogamid CX7323 is a dodecanedioic acid / 4,4'-methylenebis (cyclohexylamine) based polyamide with a glass-transition temperature of 138°C;
- EMS TR55 is a dodecanedioic acid / isophthalic acid / 3,3-dimethyl-4,4-diaminodicyclohexylmethane based polyamide with a glass-transition temperature of 160°C;
- LyondellBasell HP420M is a polypropylene homopolymer with a melting-peak temperature of 162°C;
- Ineos HD6070FA, Nova Chemicals HPS667-AB and Nova Chemicals HPS167-AB are high-density polyethylene with a melting-peak temperature of 132°C;
- Mitsui QF300E and Mitsui QF551 E are maleic anhydride modified polypropylenes;
   * Blend 1 is a 80/20 blend of Ineos HD6070FA / Dupont Bynel 41 E71 0 (anhydride-modified, linear low-density polyethylene with a melting-peak temperature of 115°C);
   * Blend 2 is a 80/20 blend of Nova Chemicals HPS667-AB / Dupont Bynel 41E710;
   * Blend 3 is a 80/20 blend of Nova Chemicals HPS167-AB / Dupont Bynel 41E710.

### Examples 11 and 12

To the outer side of one polyamide layer of the multilayer blister component of Example 3 (= Example 11 as represented in Fig. 5) and Example 7 (= Example 12 as represented in Fig. 4) are laminated an adhesive layer with a thickness of 3 µm, based on Henkel Liofol UK3640/6800 (two-component solvent-based polyurethane adhesive) and a seal layer with a thickness of 30 µm based on LyondeIIBaseII HP420M.

### Example 13.

The multilayer blister components of Examples 1 to 12 are thermoformed into blisters with a circular base of 50 mm diameter, a circular opening of 56 mm and a depth of 24 mm at a pre-heat temperature of 150°C. All the formings are subjected to sterilization cycles of respectively 40 minutes at 115°C and 20 minutes at 121°C, and Examples 9 to 12 are additionally subjected to a sterilization cycle of 15 minutes at 134°C. After sterilization, the blisters formed from the multilayer blister components did not show significant visual damage, i.e. neither deformation nor delamination.

**Table 1**

| | | | **Core** | | | | | | | | | | | |
|---|---|---|---|---|---|---|---|---|---|---|---|---|---|---|
| **Ex.** | **Polyamide** | **µm** | **Tie** | **µm** | **HDPE/PP** | **µm** | **Tie** | **µm** | **Polyamide** | **µm** | **Tie** | **µm** | **Seal** | **µm** |
| 1 | Evonik Trogamid CX7323 (Tg=138°C) | 20 | * Blend 2 | | | | | 320 | Evonik Trogamid CX7323 | 20 | | | | |
| 2 | Evonik Trogamid CX7323 | 20 | Mitsui QF300E | 48 | LyondeIIBaseII HP420M (Tm=165°C) | 96 | Mitsui QF300E | 166 | Evonik Trogamid CX7323 | 20 | | | | |
| 3 | Evonik Trogamid CX7323 | 20 | * Blend 1 | 48 | Ineos HD6070FA (Tm= 132°C) | 96 | * Blend 1 | 166 | Evonik Trogamid CX7323 | 20 | | | | |
| 4 | EMS TR55 (Tg=160°C) | 20 | * Blend 2 | 48 | Nova Chemicals HPS667-AB | 96 | * Blend 2 | 166 | EMS TR55 | 20 | | | | |
| 5 | Evonik Trogamid CX7323 | 20 | * Blend 1 | 20 | Ineos HD6070FA | 270 | * Blend 1 | 20 | Evonik Trogamid CX7323 | 20 | | | | |
| 6 | EMS TR55 | 20 | * Blend 3 | 48 | Nova Chemicals HPS167-AB | 96 | * Blend 3 | 166 | EMS TR55 | 20 | | | | |
| 7 | EMS TR55 | 20 | * Blend 1 | 20 | Ineos HD6070FA | 270 | * Blend 1 | 20 | EMS TR55 | 20 | | | | |
| 8 | EMS TR55 | 20 | * Blend 3 | 20 | Nova Chemicals HPS167-AB | 270 | * Blend 3 | 20 | EMS TR55 | 20 | | | | |
| 9 | Evonik Trogamid CX7323 | 20 | * Blend 1 | 20 | Ineos HD6070FA | 270 | * Blend 1 | 20 | Evonik Trogamid CX7323 | 20 | Mitsui QF551 E | 10 | LyondeIIBase II HP420M | 20 |
| 10 | EMS TR55 | 20 | * Blend 3 | 48 | Nova Chemicals HPS167-AB | 96 | * Blend 3 | 166 | EMS TR55 | 20 | Mitsui QF551 E | 10 | LyondeIIBase II HP420M | 20 |

## Claims

1. Multilayer film structure comprising at least two layers of polyamide and a polyolefin-based core layer sandwiched between the polyamide layers, wherein:
- the glass-transition temperature of the polyamide is at least 135°C;
- the melting-peak temperature of the polyolefin-based core layer, is lower than the glass-transition temperature of the polyamide plus 35°C.;
wherein both the glass-transition temperature and the melting-peak temperature are measured by differential scanning calorimetry, according to ISO 11357, with a heating gradient of 10°C/min.;
- the thickness of the multilayer film structure is more than 100 µm and the combined layer thickness of the polyamide layers represents less than 40%, preferably less than 30 % of the multilayer film structure.

2. The multilayer film structure according to Claim 1 wherein the glass-transition temperature of the polyamide is at least 5°C higher than the melting-peak temperature of the polyolefin-based core layer.

3. The multilayer film structure according to Claim 1 or 2 wherein the overall layer thickness is more than 120 µm, preferably more than 140 µm, more preferably more than 160 µm, most preferably more than 180 µm.

4. The multilayer film structure according to any of the preceding claims wherein the overall layer thickness is at least 200 µm, preferably at least 220 µm, more preferably at least 250 µm, most preferably at least 300 µm.

5. The multilayer film structure according to any of the preceding claims wherein the polyamide comprises alkylene and cyclohexylene moieties, or alkylene, cyclohexylene and phenylene moieties.

6. The multilayer film structure according to any of the preceding claims wherein the polyolefin-based core layer comprises one or more layers selected from the group consisting of high-density polyethylene, polypropylene and polyolefin copolymer.

7. The multilayer film structure according to any of the preceding claims wherein the polyolefin-based core layer comprises one or more layers selected from the group consisting of modified polyethylene, modified polypropylene and modified polyolefin copolymer, in contact with the polyamide layer, said modified polyethylene, polypropylene and polyolefin copolymer comprising one or more copolymerized or grafted components selected from the group consisting of maleic anhydride, vinylacetate, vinylalcohol, acrylic acid, methacrylic acid, alkyl acrylate, alkyl methacrylate.

8. The multilayer film structure according to any of the preceding claims wherein the core layer additionally comprises a tie layer facing the polyamide layer, said tie layer comprising modified polyethylene layer, modified polypropylene or modified polyolefin copolymer.

9. The multilayer film structure according to any of the preceding claims wherein the melting-peak temperature of the polyolefin-based core layer is 125°C or more, preferably 130°C or more, as measured by differential scanning calorimetry, according to ISO 11357, with a heating gradient of 10°C/min.

10. The multilayer film structure according to any of the preceding claims wherein the thickness of the polyolefin-based core layer is more than 60 µm, preferably more than 80 µm, more preferably more than 100 µm, most preferably more than 120 µm.

11. The multilayer film structure according to any of the preceding claims comprising an additional seal layer in contact with said multilayer film structure, said seal layer comprising a polyolefin selected from the group consisting of propylene homopolymer or propylene copolymer or terpolymer, the comonomers being ethylene, C4 - C8 alpha olefins or mixtures thereof.

12. The multilayer film structure according to any of the preceding claims wherein the seal layer is **characterized by** a melting-peak temperature of at least 5°C higher than the glass-transition temperature of the polyamide, as measured by differential scanning calorimetry, according to ISO 11357, with a heating gradient of 10°C/min.

13. The multilayer film structure according to any of the preceding claims wherein the additional seal layer has a thickness comprised between 2 and 30 µm, preferably between 4 and 25 µm.

14. The multilayer film structure according to any of the preceding claims being obtained by a process selected from the group consisting of lamination, co-extrusion, extrusion coating lamination and a combination thereof.

15. Sterilizable packaging comprising the multilayer film structure of any of Claims 1 to 14.

16. Sterilizable packaging of Claim 15 wherein said packaging is a blister packaging.
